Europäisches Patentamt

European Patent Office

Office européen des brevets

(11) Veröffentlichungsnummer: **0 255 078**
**A2**

(12) **EUROPÄISCHE PATENTANMELDUNG**

(21) Anmeldenummer: 87110828.8

(22) Anmeldetag: 25.07.87

(51) Int. Cl.⁴: **C09B 67/20** , **C09D 17/00**

(30) Priorität: 29.07.86 DE 3625605

(43) Veröffentlichungstag der Anmeldung:
**03.02.88 Patentblatt 88/05**

(84) Benannte Vertragsstaaten:
**CH DE ES FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Eckes, Helmut, Dr.**
**Feldbergblick 5**
**D-6239 Eppstein/Taunus(DE)**
Erfinder: **Winter, Rainer**
**Weisskirchener Strasse 60**
**D-6370 Oberursel(DE)**
Erfinder: **Münkel, Albert**
**Sindlinger Bahnstrasse 127a**
**D-6230 Frankfurt am Main 80(DE)**

(54) **Wässrige Pigmentzubereitungen und ihre Verwendung.**

(57) Wäßrige Pigmentzubereitungen, gekennzeichnet durch einen Gehalt an (a) 5 bis 80 Gew.-% eines feinteiligen anorganischen und/oder organischen Pigments, (b) 5 bis 80 Gew.-% einer wäßrigen Polyurethandispersion, (c) 2 bis 80 Gew.-% Wasser und (d) 0 bis 50 Gew.-% eines organischen Lösemittels.

EP 0 255 078 A2

## Wäßrige Pigmentzubereitungen und ihre Verwendung

Die Erfindung betrifft konzentrierte, fließfähige, mit Wasser verdünnbare, alkoholstabile und lagerstabile Zubereitungen von anorganischen und/oder organischen Pigmenten mit Polyurethandispersionen sowie deren Verwendung zur Herstellung von Druckfarben.

Die dem Stand der Technik entsprechenden wäßrigen Pigmentpräparationen enthalten neben geeigneten Pigmenten ionogene und/oder nichtionogene Pigmentdispergatoren sowie in der Regel sonstige Hilfsmittel, wie Netzmittel, Antiabsetzmittel, Entschäumer und Wasserrückhaltemittel. Diese Pigmentpräparationen eignen sich beispielsweise zum Pigmentieren von Bautenanstrichstoffen, wäßrigen Flexodruckfarben, Papiermassen oder für den textilen Pigmentdruck und den Druck auf saugenden Untergründen. Bei nichtsaugenden Untergründen führen diese Präparationen auf Grund der enthaltenen Netz-, Dispergier-und Wasserrückhaltemittel zur Trocknungsverzögerung und einem "Abliegen der Druckfarbe", wobei der Druck teilweise beim Aufwickeln der Bahn auf die Rückseite der Folie übertragen wird sowie einer schlechten Haftfestigkeit. Ein weiterer Nachteil dieser Präparationen ist die mangelnde Alkoholverträglichkeit, was zur Flokkulation der Pigmente und damit zur Reduzierung von Glanz und Farbstärke führt.

Es war somit die Aufgabe gestellt, konzentrierte, fließfähige, mit Wasser verdünnbare, alkoholstabile und lagerstabile Pigmentzubereitungen zu entwickeln, welche die genannten Nachteile, insbesondere - schlechte Haftfestigkeit und Trocknungsverzögerung, nicht aufweisen. Um dies zu erreichen, wurden anstelle der üblichen Netz-, Dispergier-und Wasserrückhaltemittel Polyurethandispersionen als Dispergierhilfsmittel eingesetzt, die aufgebaut sind, wie sie beispielsweise in der DE-OS 26 24 442 (GB-PS 1 549 458) beschrieben werden.

Bei diesen Bindemitteln handelt es sich um Polyadditionsprodukte eines Polyester-oder Polyetherdiols und der Bishydroxymethylpropansäure mit aliphatischen oder aromatischen Diisocyanaten, welche unter Neutralisation in Wasser dispergiert werden und unter Kettenverlängerung mit Polyaminen zu Harnstoffpolyurethanen umgesetzt werden. Überraschenderweise wurde festgestellt, daß die genannten Polyurethandispersionen neben den bekannten guten Filmbildungseigenschaften gute Dispergiereigenschaften für Feststoffe, insbesondere anorganische und organische Pigmente, besitzen. Mit Hilfe dieser Polyurethandispersionen können Pigmentzubereitungen hergestellt werden, die sich ohne Beeinflussung der Lagerstabilität mit hohen Mengen an Wasser, Alkoholen und/oder Glykolethern verdünnen lassen und sich besonders zur Herstellung von wäßrigen und/oder wäßrig-alkoholischen Tief-, Flexo-und Siebdruckfarben eignen.

Gegenstand der Erfindung sind somit unter Berücksichtigung der Mengenverhältnisse von Pigment, wäßriger Polyurethandispersion, Wasser und ggfs. vorhandenem Lösemittel Pigmentzubereitungen, die durch einen Gehalt an

a) 5-80 Gew.-% mindestens eines feinteiligen organischen und/oder anorganischen Pigments,
b) 5-80 Gew.-% einer wässrigen Polyurethandispersion,
c) 2-80 Gew.-% Wasser und
d) 0-50 Gew.-% eines organischen Lösemittels gekennzeichnet sind.

Unter "feinteiligem Pigment" sind hierbei Pigmente einer mittleren Teilchengröße von 50-300 nm zu verstehen.

Die als Dispergiermedium verwendeten Polyurethandispersionen sind scher-und temperaturstabil, so daß die Herstellung der erfindungsgemäßen Pigmentzubereitungen mit übli cher Dispergieraggregaten, wie Rührwerkskugelmühlen, erfolgen kann. Die erfindungsgemäßen Pigmentzubereitungen, werden durch weitere Zugabe von Polyurethandispersion, die als Bindemittel dient, Wasser und organischem Lösemittel auf Farbstärke und Viskosität eingestellt.

Als geeignete organische Lösemittel sind in erster Linie einwertige aliphatische Alkohole von 1 bis 4 Kohlenstoffatomen, wie Methanol, Ethanol, n-und iso-Propanole und n-und iso-Butanole oder Mischungen daraus zu nennen.

Die mit den erfindungsgemäßen Pigmentzubereitungen hergestellten Druckfarben und damit angefertigte Drucke auf nichtsaugenden Untergründen zeichnen sich aus durch außerordentlich hohen Glanz, hohe Transparenz, gute Haftung auf lackierten und nichtlackierten Metallfolien sowie auf verschiedenen Kunststoff-Folien und außerdem durch schnelle Trocknung.

Durch den relativ geringen Gehalt an flüchtigen Neutralisationsmitteln (Amine oder Ammoniak) in der Polyurethandispersion ist eine schnelle Filmbildung durch Verdunsten gewährleistet. Andererseits ergeben sich Vorteile in der Verdruckbarkeit gegenüber üblichen Dispersionen, da auch nach Antrocknung der Druckfarbe auf einem Druckzylinder (z.B. bei Maschinenstillstand) eine Wiederauflösung durch nachfolgende frische Druckfarbe gewährleistet ist bzw. eine Reinigung mit einer wäßrig alkoholischen Lösung und geringen Mengen N-Methylpyrrolidon möglich ist. Die Vorteile gegenüber auf dem Markt befindlichen Systemen liegen in der Kombination der guten Wiederanlösbarkeit auf der Druckmaschine und der sehr guten Wasser-und Seifenechtheit des getrockneten Druckfilms. Zusatz von handelsüblichen Vernetzern führt zur weiteren Filmverfestigung und somit noch besserer Lösemittelbeständigkeit der Drucke.

Die genannten Polyurethandispersionen eignen sich als Dispergatoren für Feststoffe, insbesondere für Pigmente und Füllstoffe in wäßrigen und wäßrig/alkoholischen Medien.

Besonders hervorzuheben ist die Eignung der beschriebenen Polyurethandispersionen zur Herstellung von Pigmentzubereitungen. Derartige Pigmentzubereitungen können anorganische und/oder organische Pigmente enthalten. Als organische Pigmente eignen sich beispielsweise Azopigmente, Azamethine, Azaporphine, Chinacridone, Flavanthron-, Anthanthron-und Pyranthronkörper, Derivate der Naphthalintetracarbonsäure, der Perylentetracarbonsäure, des Thioindigos, verlackte Pigmente wie Mg-, Ca-, Sr-, Ba-, Al-, Mn-, Co-und Ni-Salze von säuregruppenhaltigen Farbstoffen sowie entsprechende Pigmentmischungen. Als geeignete anorganische Pigmente sind beispielsweise zu nennen Weiß-und Buntpigmente, wie Titanoxid, Zinkoxid, Zinksulfid, Cadmiumsulfid oder -selenid, Eisenoxide, Chromoxide, Chromatpigmente, als Pigmente geeignete Mischoxide aus den Elementen Aluminium, Antimon, Chrom, Eisen, Kobalt, Kupfer, Nickel, Titan und Zink sowie Verschnittpigmente und Ruß.

Je nach Einsatzgebiet können die Feststoffe, insbesondere Pigmente, in den beschriebenen Polyurethandispersionen allein oder zusätzlich mit Hilfe der beschriebenen Polyurethandispersionen in Wasser oder wäßrig/alkoholischen Medien dispergiert werden. Die Feststoffdispersionen, wie insbesondere die Pigmentdispersionen können außer den beschriebenen Polyurethandispersionen weitere übliche Zusatzstoffe wie Schaum-und Viskositätsregulatoren, Antiabsetzmittel, Netz-und Konservierungsmittel enthalten.

Bevorzugte Pigmentzubereitungen enthalten 5 bis 80 Gew.-%, vorzugsweise 10 bis 60 Gew.-%, Pigmente, 5 bis 80 Gew.-%, vorzugsweise 10 bis 70 Gew.-%, der beschriebenen Polyure thandispersionen, 2 bis 80 Gew.-%, vorzugsweise 10 bis 70 Gew.-%, Wasser und 0 bis 50 Gew.-%, vorzugsweise 0 bis 30 Gew.-% Lösemittel.

Die Herstellung der Feststoffzubereitungen erfolgt je nach Kornhärte der eingesetzten Feststoffe beispielsweise mit Rührwerken, Dissolvern, Rotor-Stator-Mühlen, Kugelmühlen, Rührwerkskugelmühlen (Sand-oder Perlmühlen) und in Schnellmischern.

Feststoffzubereitungen, welche die beschriebenen Polyurethandispersionen enthalten, besitzen eine hohe Stabilität und einen hohen Feststoffgehalt bei gleichzeitig guten rheologischen Eigenschaften.

Werden als Feststoffe organische Pigmente, anorganische Pigmente und/oder Ruß eingesetzt, so werden Zubereitungen erhalten, die sich zum Pigmentieren von wäßrigen und/oder wäßrig/alkoholischen Tief-, Flexo-oder Siebdruckfarben für saugende und insbesondere nichtsaugende Untergründe eignen.

In den folgenden Beispielen bezeichnen Teile Gewichtsteile; Prozentangaben und Verhältnisse beziehen sich auf das Gewicht.

Herstellung verschiedener Polyurethandispersionen (A-E), die gemäß den weiter unten angegebenen Beispielen zur Herstellung von erfindungemäßen Pigmentzubereitungen eingesetzt werden:

## Dispersion A

100 Teile eines Polyesterdiols (hergestellt aus 1 Mol Adipinsäure, 3 Mol Isophthalsäure und 4,8 Mol Hexandiol-1,6, Säurezahl 8) und 12,5 Teile Bishydroxymethylpropionsäure wurden in 69,4 Teilen N-Methylpyrrolidon gelöst und bei 75°C 2 Stunden mit Hexamethylendiisocyanat-1,6 umgesetzt. Dann gab man 11,8 Teile Triethylamin zu der Urethanpräpolymerlösung und ließ nach ca. 15 Minuten den Ansatz gleichmäßig unter gutem Rühren in 290 Teile E-Wasser laufen. Nachdem eine gleichmäßige Dispersion entstanden war, tropfte man 2,7 Teile Diethylentriamin zu. Man erhielt eine fast transparente Polyurethandispersion mit einem Festkörpergehalt von ca. 30 Gew.-%.

Dispersion B

100 Teile eines Polyesterdiols (wie bei Dispersion A), 30 Teile Perhydrobisphenol A und 12,5 Teile Bishydroxymethylpropionsäure wurden in 93,8 Teilen Methylethylketon gelöst und bei 75 °C mit 57,6 Teilen Hexamethylendiisocyanat-1,6 2 Stunden umgesetzt. Dann gab man den Präpolymeransatz langsam unter gutem Rühren zu einer Lösung von 11,8 Teilen Triethylamin in 390 Teilen E-Wasser. Nachdem eine gleichmäßige Dispersion entstanden war, tropfte man 4,6 Teile Diethylentriamin zu. Man erhielt eine leicht opaleszierende Polyurethandispersion mit einem Festkörpergehalt von ca. 30 Gew.-%.

Dispersion C

100 Teile eines Polyesterdiols (wie bei Dispersion A), 10 Teile Perhydrobisphenol A, 12,5 Teile Bishydroxymethylpropionsäure wurden in 62,7 Teilen N-Methylpyrrolidon gelöst und 2 Stunden bei 75 °C mit 54,2 Teilen Isophorondiisocyanat umgesetzt. Die Präpolymerlösung überführte man langsam in eine Lösung von 11,8 Teilen Triethylamin in 270 Teilen E-Wasser. Unter gutem Rühren entstand eine Dispersion, in welche eine Lösung von 2,44 Teilen 1,2-Diaminopropan in 21,9 Teilen E-Wasser eingetropft wurden. Man erhielt eine blanke Polyurethandispersion mit 35 % Festkörper.

Dispersion D

100 Teile eines hydroxylgruppenhaltigen Polyesters (hergestellt aus 3,5 Mol Phthalsäureanhydrid, 0,25 Mol Benzoesäure, 0,09 Mol Maleinsäureanhydrid, 3,0 Mol Neopentylglykol, 0,1 Mol Trimethylolpropan und 0,8 Mol Propandiol-1,2, OH-Zahl 60) und 12,5 Teile Bishydroxymethylpropionsäure wurden in 61,5 Teilen N-Methylpyrrolidon gelöst und bei 75 °C 2 Std. mit 38,9 Teilen Isophorondiisocyanat umgesetzt. Die Präpolymerlösung wurde nach Zugabe von 11,8 Teilen Triethylamin in eine Vorlage mit 220 Teilen E-Wasser überführt, wobei unter gutem Rühren eine Dispersion entstand. Man tropfte eine Lösung von 2,5 Teilen Diethylentriamin in 10 Teilen E-Wasser zu und erhielt eine trübe Polyurethandispersion mit 35 % Festkörper.

Dispersion E

100 Teile eines Polyesterdiols (wie bei Dispersion A), 50 Teile Polyethylenglykol (vom Mol-Gew. 400) und 12,5 Teile Bishydroxymethylpropionsäure wurden in 94,7 Teilen N-Methylpyrrolidon gelöst und 2 Std. bei 75 °C mit 76,2 Teilen Isophorondiisocyanat umgesetzt. Nach Zugabe von 11,8 Teilen Triethylamin gab man den Ansatz langsam in 350 Teile E-Wasser, wobei unter gutem Rühren eine Dispersion entstand. Nach Zutropfen einer Lösung von 4,7 Teilen Diethylentriamin in 29 Teilen E-Wasser erhielt man eine klare Dispersion mit einem Festkörpergehalt von ca. 35 % und einer Viskosität von 320 mPa.s bei 20 °C.

Beispiel 1

150 Teile C.I. Pigment Blue 15:3 (Colour Index No. 74160) wurden mit einem Sägezahnrührer in 300 Teile der weiter oben unter Dispersion A beschriebenen Polyurethandispersion und 2 Teile E-Wasser eingerührt. Die entstandene Pigmentsuspension wurde mit Hilfe von Siliquarzitglasperlen von 1 mm Durchmesser 60 Minuten in einer Perlmühle dispergiert. Nach Zugabe weiterer 48 Teile E-Wasser erhielt man eine sehr gut fließfähige, lagerstabile Pigmentzubereitung.

## Beispiel 2

125 Teile C.I. Pigment Yellow 17 (Colour Index No. 21105) wurden mit einem Sägezahnrührer in 250 Teile der weiter oben unter Dispersion C beschriebenen Polyurethandispersion und 50 Teile i-Propanol eingerührt. Die so erhaltene Pigmentsuspension wurde 60 Minuten in einer 1l-Perlmühle gemahlen, die mit 1000 Teilen 1 mm Siliquarzitperlen gefüllt war. Bei einer Kühlwassertemperatur von 25 °C erwärmte sich das Mahlgut auf 40 °C. Nach dem Verdünnen mit 75 Teilen E-Wasser wurde eine sehr gut fließfähige, lagerstabile Pigmentzubereitung erhalten.

## Beispiel 3

In einem Mahlbehälter von 1 l Inhalt wurden 300 Teile der weiter oben unter Dispersion B beschriebenen Polyurethandispersion und 35 Teile E-Wasser vorgelegt und am Sägezahnrührer 1000 Teile Pigment Red 185 (Colour Index No. 12516) eingerührt. Die so erhaltene Pigmentsuspension wurde 80 Minuten in einer diskontinuierlichen Perlmühle gemahlen. Nach Zugabe weitere 65 Teile E-Wasser erhielt man eine sehr gut fließfähige, lagerstabile Pigmentzubereitung.

## Beispiel 4

In einem Mahlbehälter mit 1 l Inhalt wurden 225 Teile der weiter oben unter Dispersion D beschriebenen Polyurethandispersion und 20 Teile E-Wasser vorgelegt und bei laufender Dissolverscheibe 175 Teile eines Furnacerußes mit einer mittleren Teilchengröße von 30 nm eingerührt. Die erhaltene Rußsuspension wurde 40 Minuten in einer Perlmühle gemahlen und mit den restlichen 80 Teilen E-Wasser zu einer gut fließfähigen, lagerstabilen Rußzubereitung verdünnt.

## Beispiel 5

135 Teile eines Furnacerußes mit einer mittleren Teilchengröße von 30 nm wurden in einer Mischung aus 180 Teilen der vorstehend unter Dispersion E beschriebenen Polyurethandispersion, 45 Teilen Ethanol und 30 Teilen E-Wasser angeteigt und 40 Minuten in einer diskontinuierlichen Rührwerkskugelmühle gemahlen. Nach Zugabe weiterer 60 Teile E-Wasser erhielt man eine sehr gut fließfähige, lagerstabile Rußzubereitung.

## I. Herstellung der Druckfarbe (Basis Polyurethandispersion):

Generell wurde zum Einstellen der Druckfarbe auf Verarbeitungsviskosität folgende Verdünnung verwendet:

Teile Polyurethan-Dispersion (Dispersion C ca. 35 %ig)
24 Teile Ethanol
14 Teile i-Propanol
7 Teile E-Wasser

Die nach Beispielen 1-5 hergestellten Pigmentzubereitungen können in beliebigem Verhältnis mit der hergestellten Verdünnung mit einem Schnellrührer gemischt werden. Das Mischungsverhältnis ist von der gewünschten Farbstärke abhängig. Für eine ca. 6 %ig pigmentierte Druckfarbe er gibt sich folgende Kombination:

```
 24,0 Teile    Pigment-Zubereitung auf Basis Polyurethan-
               dispersion (Pigmentgehalt 25 %)
 76,0 Teile    Polyurethan-Dispersion-Verdünnung
100,0 Teile
```

II. Vergleichsdruckfarbe (Basis Acrylatharz):

Im Vergleich zu einem handelsüblichen Druckfarbensystem, bestehend aus einer dem Stand der Technik entsprechenden wasserverdünnbaren, teigförmigen Pigmentzubereitung und einem wasserlöslichen Acrylatharz, wurden folgende Prüfungen durchgeführt:

    a) Naßscheuerfestigkeit mit Wasser-und einer schwach alkalischen Seifenlösung
    b) Trocknungsprüfung
    c) Tesaabrißtest
    d) Alkoholverträglichkeit

Bevor die Prüfung durchgeführt werden konnte, mußte die Formulierung der handelsüblichen Farbe geändert werden. Bei Verwendung gleicher Alkoholmengen wie unter Punkt I. aufgeführt, wurde eine starke Flokkulationsneigung festgestellt. Das ca. 40 %ige wäßrige Acrylatharz wurde deshalb wie folgt verdünnt:

55 Teile Acrylatharz ca. 40 %ig
14 Teile Ethanol
7 Teile i-Propanol
24 Teile E-Wasser

Die Herstellung der Druckfarbe erfolgte dann wie unter I. beschrieben:

    24,0 Teile    Pigment-Präparation nach Stand der Technik
    <u>76,0 Teile</u>    Acrylatharz-Verdünnung
    100,0 Teile

Zu a) Zur Prüfung der Naßscheuerfestigkeit wurden die fertigen Druckfarben mit einer 12 μm Rakel (Handcoater) auf eine transparente Polyethlenfolie appliziert. Nach einer kurzen Ablüftzeit zwischen 40 und 80 °C zur möglichst vollständigen Entfernung der Restlösemittel wurden die Folien mit einem Timperley-Gerät Typ RST einmal mit Wasser und einmal mit einer 1 %igen Seifenlösung nach DIN 16524 geprüft.

## Tabelle I

| | Naßscheuerfestigkeit Wasser | Naßscheuer-festigkeit Seifenlösung 1 %ig |
|---|---|---|
| (I) Erfindungsgemäße Polyurethanpig-mentzubereitung + Polyurethan-Dis-persion | 1.500 Hübe | 500 Hübe |
| (II) Handelsübliche Pigmentzuberei-tung + Acrylatharz | 100 Hübe | 25 Hübe |

Zu b) Die unter I. hergestellten Druckfarben wurden mit einer 24 μm Rakel (Handcoater) auf eine transparente Polyethylen-Folie aufgezogen. Im Abstand von jeweils 1 Minute wurde mittels Fingerabdruck festgestellt, in welcher Zeit die Trocknung bei Raumtemperatur abge schlossen war. Die Trocknung war erst dann vollständig abgeschlossen, wenn kein Fingerabdruck mehr auf der Folienoberfläche zu erkennen war. Die unter I. beschriebenen Polyurethan-Dispersionen trockneten in einem Zeitraum zwischen 15 und 30 Minuten. Die als Vergleich verwendete Acrylatdruckfarbe war nach mehr als 4 Stunden noch nicht klebfrei.

Zu c) Die Haftfestigkeit wurde durch einen sogenannten "Tesaabrißtest" geprüft. Die Farbe wurde dazu ebenfalls auf eine durch Corona-Entladung vorbehandelte Polyethylenfolie appliziert, die eine Mindestoberflächenspannung von 38 dyn•cm$^{-1}$ aufweisen soll. Die Prüfung erfolgte nach einer kurzen Ablüftzeit der fertigen Drucke bei ca. 60 °C. Die Haftfestigkeit der erfindungsgemäßen Polyurethan-Druckfarbe war einwandfrei, während die herkömmliche Acrylatfarbe ganz oder teilweise von der Folienoberfläche abgelöst wurde.

Zu d) Die jeweiligen Pigment-Präparationen sowie die dazugehörigen Bindemittel wurden auf ihre Alkoholverträglichkeit überprüft. Dazu wurden jeweils die Pigment-Präparation und die Bindemittel mit 20, 30 und 50 % Ethanol gemischt und ca. 1 Stunde stehengelassen. Bei den Pigment-Präparationen wurde anhand von mikroskopischen Untersuchungen festgestellt, ob eine Flokkulation stattgefunden hatte. Es stellte sich heraus, daß die handelsübliche Pigmentpräparation bei 30 % Alkoholgehalt stark flokkuliert war. Die nach Beispiel 5 hergestellte Pigmentpräparation war dagegen bis zu einem Alkoholgehalt von 50 % einwandfrei flokkungstabil. Die beiden Bindemittellösungen konnten anhand ihrer Trübungsneigung beurteilt werden. Die Acrylat-Lösung war ab einem Alkoholgehalt von 30 % milchig trüb und stark eingedickt. Die Polyurethandispersion dagegen war bis zu einem Alkoholgehalt von 50 % klar bis opak und einwandfrei fließfähig.

## Ansprüche

1. Wäßrige Pigmentzubereitungen, gekennzeichnet durch einen Gehalt an (a) 5 bis 80 Gew.-% eines feinteiligen anorganischen und/oder organischen Pigments, (b) 5 bis 80 Gew.-% einer wäßrigen Polyurethandispersion, (c) 2 bis 80 Gewichtsprozent Wasser und (d) 0 bis 50 Gew.-% eines organischen Lösemittels.

2. Wäßrige Pigmentzubereitungen nach Anspruch 1, dadurch gekennzeichnet, daß die wäßrige Polyurethandispersion eine wäßrige Dispersion eines Polyadditionsprodukts eines Polyester-oder Polyetherdiols und der Bis-hydroxymethylpropansäure mit einem aliphatischen oder aromatischen Diisocyanat, welches unter Neutralisation in Wasser dispergiert und mit einem Polyamin unter Kettenverlängerung zu einem Harnstoffpolymer umgesetzt wird, ist.

3. Wäßrige Pigmentzubereitungen nach Anspruch 1, dadurch gekennzeichnet, daß das organische Pigment ein Azopigment, Azamethin, Azaporphin, Chinacridon, Flavanthron, Anthanthron oder Pyranthron oder ein Derivat der Naphthalintetracarbonsäure, Perylentetracarbonsäure oder des Thioindigos oder ein Mg-, Ca-, Sr-, Ba-, Al-, Mn-, Co-oder Ni-Salz eines säuregruppenhaltigen Farbstoffes oder eine Mischung daraus ist.

4. Wäßrige Pigmentzubereitungen nach Anspruch 1, dadurch gekennzeichnet, daß das anorganische Pigment Titandioxid, Zinkoxid, Zinksulfid, Cadmiumsulfid oder -selenid, ein Eisenoxid, ein Chromoxid, ein Chromat oder ein geeignetes Mischoxid aus den Elementen Aluminium, Antimon, Chrom, Eisen, Kobalt, Kupfer, Nickel, Titan und Zink oder ein Verschnittpigment oder Ruß ist.

5. Wäßrige Pigmentzubereitungen nach Anspruch 1, dadurch gekennzeichnet, daß das organische Lösemittel ein einwertiger aliphatischer Alkohol von 1 bis 4 Kohlenstoffatomen ist.

6. Wäßrige Pigmentzubereitungen nach Anspruch 1, dadurch gekennzeichnet, daß das feinteilige Pigment eine mittlere Teilchengröße von 50-300 nm aufweist.

7. Verwendung der wäßrigen Pigmentzubereitungen des Anspruchs 1 zum Pigmentieren von wäßrigen und/oder wäßrig/alkoholischen Tief-, Flexo-oder Siebdruckfarben für saugende und nichtsaugende Untergründe.

Patentansprüche für folgenden Vertragsstaat : ES

1. Verfahren zum Pigmentieren von wäßrigen und/oder wäßrig/alkoholischen Tief-, Flexo-oder Siebdruckfarben für saugende und nichtsaugende Untergründe, dadurch gekennzeichnet, daß man hierzu wäßrige Pigmentzubereitungen mit einem Gehalt an (a) 5 bis 80 Gew.-% eines feinteiligen anorganischen und/oder organischen Pigments, (b) 5 bis 80 Gew.-% einer wäßrigen Polyurethandispersion, (c) 2 bis 80 Gewichtsprozent Wasser und (d) 0 bis 50 Gew.-% eines organischen Lösemittels verwendet.

2. Verfahren nach Anspruch 1, dadurch gekennzeichnet, daß die in der wäßrigen Pigmentzubereitung enthaltene wäßrige Polyurethandispersion eine wäßrige Dispersion eines Polyadditionsprodukts eines Polyester-oder Polyetherdiols und der Bis-hydroxymethylpropansäure mit einem aliphatischen oder aromatischen Diisocyanat, welches unter Neutralisation in Wasser dispergiert und mit einem Polyamin unter Kettenverlängerung zu einem Harnstoffpolymer umgesetzt wird, ist.

3. Verfahren nach Anspruch 1, dadurch gekennzeichnet, daß das in der wäßrigen Pigmentzubereitung enthaltene feinteilige organische Pigment ein Azopigment, Azamethin, Azaporphin, Chinacridon, Flavanthron, Anthanthron oder Pyranthron oder ein Derivat der Naphthalintetracarbonsäure, Perylentetracarbonsäure oder des Thioindigos oder ein Mg-, Ca-, Sr-, Ba-, Al-, Mn-, Co-oder Ni-Salz eines säuregruppenhaltigen Farbstoffes oder eine Mischung daraus ist.

4. Verfahren nach Anspruch 1, dadurch gekennzeichnet, daß das in der wäßrigen Pigmentzubereitung enthaltene feinteilige anorganische Pigment Titandioxid, Zinkoxid, Zinksulfid, Cadmiumsulfid oder -selenid, ein Ei senoxid, ein Chromoxid, ein Chromat oder ein geeignetes Mischoxid aus den Elementen Aluminium, Antimon, Chrom, Eisen, Kobalt, Kupfer, Nickel, Titan und Zink oder ein Verschnittpigment oder Ruß ist.

5. Verfahren nach Anspruch 1, dadurch gekennzeichnet, daß das in der wäßrigen Pigmentzubereitung enthaltene organische Lösemittel ein einwertiger aliphatischer Alkohol von 1 bis 4 Kohlenstoffatomen ist.

6. Verfahren nach Anspruch 1, dadurch gekennzeichnet, daß das in der wäßrigen Pigmentzubereitung enthaltene feinteilige Pigment eine mittlere Teilchengröße von 50 - 300 nm aufweist.